# EUROPEAN PATENT APPLICATION

(11) **EP 4 613 556 A1**
(43) Date of publication of application: **10.09.2025**
(21) Application number: 23885398.0
(22) Date of filing: 22.09.2023
(51) Int. Cl.: B60Q 1/14

(54) **VEHICLE HEADLIGHT CONTROL DEVICE, VEHICLE HEADLIGHT CONTROL METHOD, AND VEHICLE HEADLIGHT SYSTEM**

(30) Priority: 31.10.2022 JP 2022174223
(71) Applicant: Stanley Electric Co. Ltd., Tokyo 153-8636 (JP)
(72) Inventor: KAIZUMI, Yasuaki, Tokyo 153-8636 (JP); NISHIMURA, Shota, Tokyo 153-8636 (JP); SHOJI, Hideyasu, Tokyo 153-8636 (JP)
(74) Representative: Carstens, Dirk Wilhelm
(86) International application number: PCT/JP2023/034406
(87) International publication number: WO 2024/095634

(57) **Abstract**

To improve forward visibility during ADB control.

A control apparatus for a vehicle headlight for controlling the operation of the vehicle headlight, where the control apparatus sets a dimming range within the high beam irradiation range in accordance with the position of a target object in front of the vehicle, where, when the high beam and the low beam are instructed to be turned on, the control apparatus sets luminous intensity of a partial range to a first luminous intensity, the partial range being in front of the vehicle and at least in an oncoming lane side region with respect to the vehicle and set between a virtual reference line parallel to the vehicle width direction of the vehicle and a predetermined position below the virtual reference line, where, when the high beam is not instructed to be turned on but the low beam is instructed to be turned on, the control apparatus sets luminous intensity of the partial range to a second luminous intensity which is lower than the first luminous intensity, and where the control apparatus generates a control signal for operating the vehicle lamp based on the setting result of the dimming range and the setting result of the luminous intensity of the partial range, and outputs the control signal to the vehicle headlight.

## Description

### TECHNICAL FIELD

The present disclosure relates to a control apparatus for a vehicle headlight, a control method for a vehicle headlight, and a vehicle headlight system.

### BACKGROUND ART

Variable light distribution control is known as a control technology for vehicle headlights, which selectively dims (or turns off) high beams in areas where preceding vehicles, oncoming vehicles, or pedestrians are present in order to prevent glare to these target objects. Such variable light distribution control is also called ADB (Adaptive Driving Beam) control. Japanese Unexamined Patent Application Publication No.2022-70295 (Patent Document 1) describes a vehicle lamp control device configured to include a headlamp equipped with a lamp unit that can change the light distribution pattern of the emitted light and its irradiation optical axis, and a control means that controls the lamp unit based on position information of a target object detected by a camera, where the control means includes a target object detection unit that detects a dark zone that occurs when the lamp unit irradiates the target object with light, and a lamp control unit that selectively or integrally controls the light distribution pattern and irradiation optical axis of the lamp unit based on the detected dark zone.

Here, in the case of using the ADB control described above, especially when the control device dims its light in response to a target object on the oncoming lane side, forward visibility could be reduced due to a decrease in the light irradiated near the dimming range. This is considered to be due to the fact that with a conventional low beam, the upper end of the low beam is set relatively lower on the oncoming lane side than on the own lane side, resulting in a decrease in the irradiation intensity of the low beam near the dimming range.

### PRIOR ART DOCUMENT

### PATENT DOCUMENT

[Patent Document 1] Japanese Unexamined Patent Application Publication No. 2022-70295

### SUMMARY OF THE INVENTION

### TECHNICAL PROBLEM

In a specific aspect, it is an object of the present disclosure to improve the forward visibility during ADB control.

### SOLUTION TO THE PROBLEM

(1) A control apparatus for a vehicle headlight according to one aspect of the present disclosure is (a) a control apparatus for controlling the operation of a vehicle headlight mounted on a vehicle and capable of irradiating a low beam and a high beam with a variable light distribution pattern, (b) where, when a target object is present in front of the vehicle, based on a detection result of the target object, the control apparatus sets a dimming range within irradiation range of the high beam according to the position of the target object, (c) where, when the high beam and the low beam are instructed to be turned on, the control apparatus sets luminous intensity of a partial range to a first luminous intensity, the partial range being in front of the vehicle and at least in an oncoming lane side region with respect to the vehicle and set between a virtual reference line parallel to the vehicle width direction of the vehicle assumed in front of the vehicle and a predetermined position below the virtual reference line, where, when the high beam is not instructed to be turned on and the low beam is instructed to be turned on, the control apparatus sets luminous intensity of the partial range to a second luminous intensity which is lower than the first luminous intensity, and (d) where the control apparatus generates a control signal for operating the vehicle lamp based on the dimming range setting result and the luminous intensity setting result for the partial range, and outputs the control signal to the vehicle headlight.
(2) A control method for a vehicle headlight according to one aspect of the present disclosure is (a) a control method for controlling the operation of a vehicle headlight mounted on a vehicle and capable of irradiating a low beam and a high beam with a variable light distribution pattern, (b) where, when a target object is present in front of the vehicle, based on a detection result of the target object, a controller sets a dimming range within irradiation range of the high beam according to the position of the target object, (c) where, when the high beam and the low beam are instructed to be turned on, the controller sets luminous intensity of a partial range to a first luminous intensity, the partial range being in front of the vehicle and at least in an oncoming lane side region with respect to the vehicle and set between a virtual reference line parallel to the vehicle width direction of the vehicle assumed in front of the vehicle and a predetermined position below the virtual reference line, where, when the high beam is not instructed to be turned on and the low beam is instructed to be turned on, the controller sets luminous intensity of the partial range to a second luminous intensity which is lower than the first luminous intensity, and (d) where the controller generates a control signal for operating the vehicle lamp based on the dimming range setting result and the luminous intensity setting result for the partial range, and outputs the control signal to the vehicle headlight.
(3) One embodiment of a vehicle headlight system includes: the control apparatus according to (1) described above; a headlight controlled by the control apparatus; and a sensor for detecting the target object.

According to the above configurations, it is possible to improve the forward visibility during ADB control.

### BRIEF DESCRIPTION OF THE DRAWINGS

FIG. 1(A) is a block diagram showing the configuration of a vehicle headlight system according to one embodiment.
FIG. 1(B) is a schematic front view of a headlight.
FIG. 2 is a diagram showing a configuration example of a computer system.
FIG. 3(A) is a diagram for explaining a low beam, a high beam, and a partial range of the low beam.
FIG. 3(B) is a diagram showing a low beam and a partial range of the low beam extracted from FIG. 3(A), and FIG. 3(C) is a diagram showing a high beam extracted from FIG. 3(A).
FIG. 4(A) is a diagram for explaining a control method of the partial range that is irradiated to overlap with the low beam.
FIG. 4(B) is a partially enlarged view of FIG. 4(A).
FIG. 5 is a flowchart showing an operation procedure of a controller in a vehicle headlight system.

### MODE FOR CARRYING OUT THE INVENTION

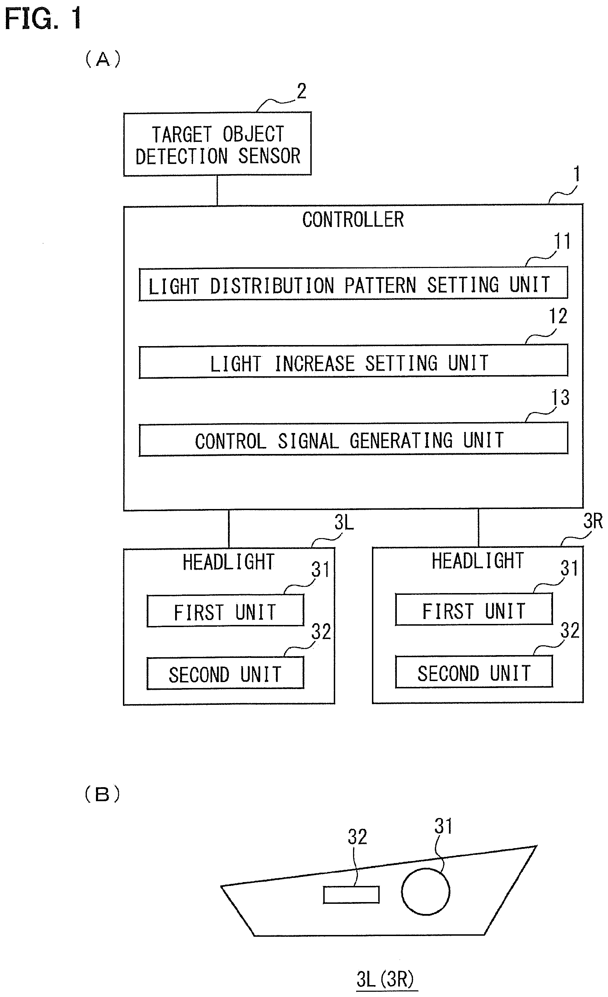

FIG. 1(A) is a block diagram showing the configuration of a vehicle headlight system according to one embodiment. The vehicle headlight system according to the present embodiment is configured to include a controller 1, a target object detection sensor 2, and a pair of headlights 3L, 3R. In the present embodiment, controller 1 corresponds to a "control apparatus," and the method of controlling headlights 3L, 3R using this controller 1 corresponds to a "control method."

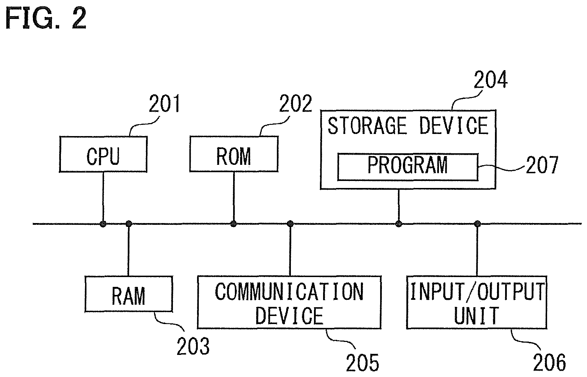

Controller 1 is connected to target object detection sensor 2 and each of headlights 3L, 3R, and controls light irradiation emitted by each of headlights 3L, 3R according to the detection results of the target object by vehicle detection sensor 2. This controller 1 can be configured using a computer system (refer to FIG. 2 described below) equipped with, for example, a processor (CPU: Central Processing Unit), a storage device such as a ROM (Read Only Memory), a RAM (Random Access Memory), a flash memory, and an input/output interface. Controller 1 of the present embodiment is capable of performing a predetermined function by having a program stored in advance in the storage device (or ROM) being read out and executed by the processor.

Target object detection sensor 2 detects target objects such as preceding vehicles, oncoming vehicles, pedestrians, and bicycles, and provides information such as their position, size, and type to controller 1. Target object detection sensor 2 may be, for example, a sensor that detects target objects by taking a photo of the area in front of the vehicle with a camera and performing image analysis on the image data. Alternatively, LiDAR (Light Detection And Ranging) may be used, which detects target objects by irradiating the target object with light such as near-infrared light and detects the reflected light with an optical sensor, or further, a millimeter wave radar may be used, which detects target objects by irradiating the target object with radio waves at a frequency of tens to hundreds of GHz and detects the reflected waves.

Headlights 3L, 3R are installed at predetermined positions on the left and right sides of the front of the vehicle, and operate based on control signals provided by controller 1 to irradiate light ahead of the vehicle. Each headlight 3L, 3R is equipped with a first unit 31 and a second unit 32, respectively. As shown in a schematic front view of headlight 3L in FIG. 1(B), first unit 31 and second unit 32 are provided separately and installed within a housing. Since headlight 3R is laterally symmetrical to headlight 3L, a figure is omitted. Here, note that first unit 31 and second unit 32 may be configured as one unit.

First unit 31 forms a low beam, which is a light for irradiating forward region relatively close to the vehicle, and a high beam, which is a light for irradiating forward region relatively far from the vehicle. In the present embodiment, with regard to irradiation of the high beam, the above-described variable light distribution control (ADB control) is performed. Specifically, for example, within the entire irradiation range of the high beam, the range where a preceding vehicle or an oncoming vehicle exists is set as a range where the light is dimmed, and the other range is set as a range where high beam is irradiated. Here, note that the concept of "dimming" in this embodiment includes setting the light intensity to 0 in addition to setting the light intensity relatively lower than that of a normal high beam.

First unit 31 capable of emitting a high beam with a variable light distribution pattern as described above may be a unit having a plurality of light-emitting diodes (Light Emitting Diodes) arranged in two directions, and capable of individually controlling on/off of each light-emitting diode, for example. Further, first unit 31 may be a unit that combines a light source bulb with a reflector or a shielding plate, or may be a unit that combines a liquid crystal element that can individually control light transmission state of each pixel with a light source, or may be a unit that can control the timing of turning on and off a semiconductor laser such as a laser diode and the scanning timing of a scanning element. Furthermore, a unit that combines a plurality of lamps that can each emit a different fixed light distribution may also be used.

Second unit 32 emits light for irradiating a partial range that is set so as to overlap with at least a portion of the irradiation range of the low beam irradiated by first unit 31. The specific position of the partial range will be described later. Second unit 32 may be a unit having several light-emitting diodes that can be individually controlled to be turned on and off, for example.

The functions realized by the above-described controller 1 executing a program will be explained using functional blocks. Controller 1 is configured to include a light distribution pattern setting unit 11, a light increase setting unit 12, and a control signal generating unit 13.

Light distribution pattern setting unit 11 variably sets the light distribution pattern within the entire irradiation range of the high beam based on the detection result of the target object by target object detection sensor 2, and outputs the setting content to control signal generating unit 13. The light distribution pattern includes an irradiation range and a dimming range. As described above, for example, a predetermined range including the position of a preceding vehicle or an oncoming vehicle is set as the dimming range, and the other range is set as the light irradiation range.

Light increase setting unit 12 sets whether or not to increase light emitted to the partial range (the region irradiated by second unit 32) that is arranged to overlap with at least a portion of the above-described irradiation range of the low beam. Specifically, when the low beam is irradiated and the high beam (including during ADB control) is also irradiated, light increase setting unit 12 sets to increase light emitted to the partial range. Further, when the low beam is irradiated and the high beam (including during ADB control) is not irradiated, light increase setting unit 12 sets to dim or turn off the emitted light to the partial range.

Control signal generating unit 13 generates a control signal for realizing the irradiation pattern set by light distribution pattern setting unit 11, and outputs the control signal to first unit 31. Further, control signal generating unit 13 generates a control signal according to the necessity and range of light increase set by light increase setting unit 12, and outputs the control signal to second unit 32.

FIG. 2 is a diagram showing a configuration example of a computer system. The above-described controller 10 can be configured using, for example, the computer system as shown in the figure. A CPU (Central Processing Unit) 201 processes information by reading and executing a program 207 stored in a storage device 204. A ROM (Read Only Memory) 202 stores basic control programs and the like required for the operation of CPU 201. A RAM (Temporary Storage Memory) 203 temporarily stores data required for the information processing of CPU 201. A storage device 204 is a large-capacity storage device for storing data, and is comprised of a hard disk drive, solid state drive, or the like. A communication device 205 performs processing related to data communication with other external devices. An input/output unit 206 is an interface for connecting to external devices. The CPU 201 and the like are connected to each other via a bus so that they can communicate with each other.

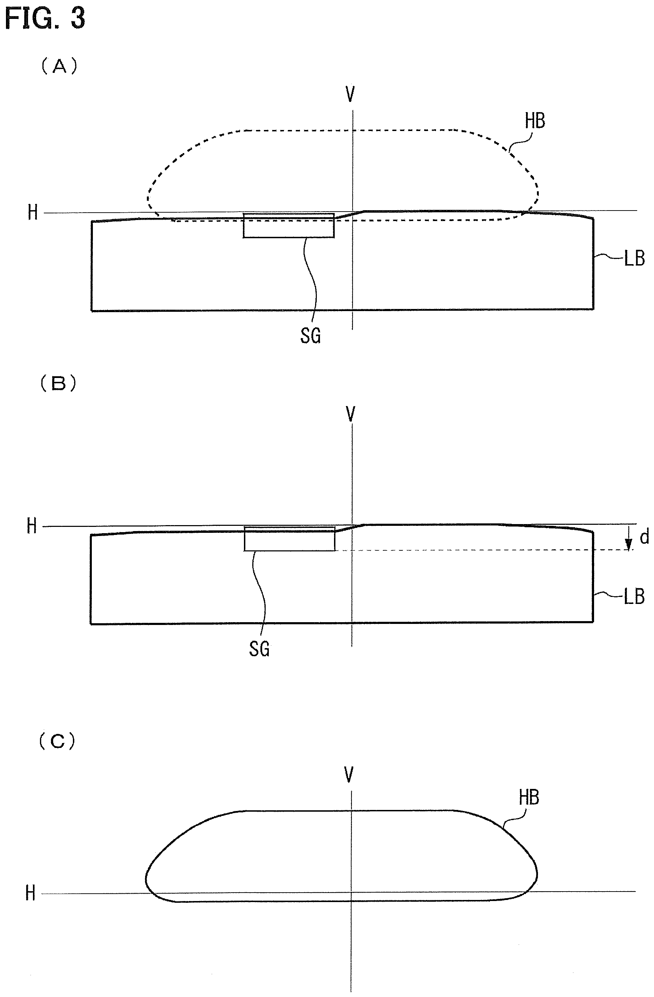

FIG. 3(A) is a diagram for explaining a low beam, a high beam, and a partial range of the low beam. In FIG. 3(A), the high beam is shown by a dotted line so that the positional relationship between the low beam and the high beam can be easily understood. FIG. 3(B) is a diagram showing the low beam and the partial range of the low beam extracted from FIG. 3(A), and FIG. 3(C) is a diagram showing the high beam extracted from FIG. 3(A). Each diagram shows main irradiation range of the low beam, etc. on a virtual screen assumed in the vertical direction at a predetermined position (e.g., 25 m) in front of the vehicle. In the figures, line H which is a straight line extending horizontally, indicates a horizontal direction reference line (i.e., a virtual reference line in the vehicle width direction), and line V which is a straight line extending vertically, indicates a vertical direction reference line **(i.e.,** a virtual reference line in the vehicle height direction). Here, in the present embodiment, the irradiation range of the low beam, etc. is assumed when traffic regulations stipulate so-called "right-hand traffic", but when traffic regulations stipulate so-called "left-hand traffic", the irradiation range is reversed horizontally.

The upper end of low beam LB on the right side of line V in the figure is almost in contact with line **H,** and the upper end on the left side of line V in the figure is located almost in a straight line below line H, and a portion between the upper end right side and upper end left side intersects diagonally with line V, and as a whole, it is formed wide below line H. In the present embodiment, the region to the left side of line V in the figure corresponds to an oncoming lane side region, and the region to the right side of line V corresponds to an own lane side region. As shown in the figure, the upper end of the low beam LB is set relatively lower on the oncoming lane side than on the own lane side. In detail, the upper end position of low beam LB on the oncoming lane side is set lower than line H, and the upper end position on the own lane side is set so that it approximately coincides with line H. That is, the upper end position on the oncoming lane side is set lower than the upper end position on the own lane side. Here, note that the "upper end position" refers to the upper end of the range in the low beam irradiation range where the luminous intensity is equal to or greater than a predetermined standard (e.g., 2500 [cd]).

Among the left and right regions in the figure adjacent to each other separated by line V, a partial range SG that partially overlaps with low beam LB is provided as a portion of a predetermined width extending from a position close to line V to a position far from line V in at least in the left side region of the figure (the region on the oncoming lane side). Further, partial range SG is also provided as a portion of a predetermined height "d" below line H. The height "d", for example, is preferably within a range of 3° below line H, at an angle based on the position of the vehicle, and more preferably within a range of 1° to 2°. Here, the end portion of the range of partial range SG refers to the end portion of the range where the luminous intensity is equal to or greater than a predetermined standard (for example, 2500 [cd]).

High beam HB is generally formed in a wide range above line H and extends to the left and right of line V. In detail, high beam HB is formed so that its lower end extends slightly below line H, and this lower end side is formed so that it partially overlaps with the upper end side of low beam LB. Furthermore, high beam HB can be configured to have a variable dimming range at least in the width direction (direction parallel to line H) within the entire irradiation range indicated by the dotted line in FIG. 3(A). Here, the dimming range may be configured to be variable not only in the width direction but also in the vertical direction (direction parallel to line V). Here, the end portion of the range of high beam HB refers to the end portion of the range where the luminous intensity is equal to or greater than a predetermined standard (for example, 2500 [cd]).

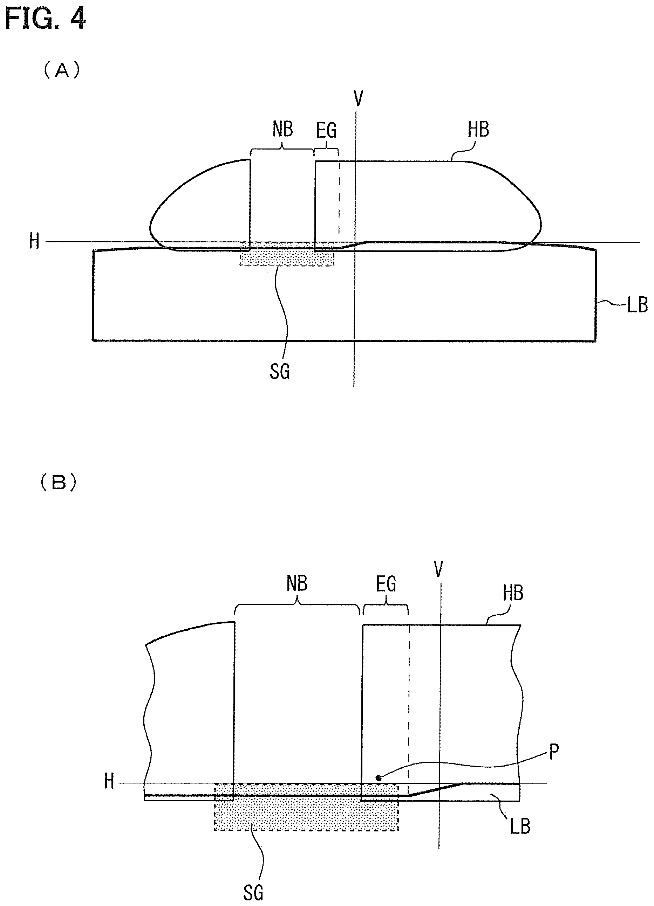

FIG. 4(A) is a diagram for explaining a control method of the partial range that is irradiated to overlap with the low beam. FIG. 4(B) is a partially enlarged view of FIG. 4 (A) . In the present embodiment, high beam HB is irradiated according to a light distribution pattern in which a dimming range is set by light distribution pattern setting unit 11 according to the position of a preceding vehicle, an oncoming vehicle, etc. As a result, as shown in the figure, dimming range NB according to the position of the oncoming vehicle, etc. is provided within the irradiation range of high beam HB. As described above, this dimming range NB is a range that is dimmed more than the other irradiation range of high beam HB.

When such ADB control is being performed, or when high beam is being irradiated even when ADB control is not being performed, light increase setting unit 12 sets second unit 32 to increase light irradiated to partial range SG. Further, when high beam (including when ADB control is being performed) is not being irradiated and low beam is being irradiated, light increase setting unit 12 sets second unit 32 to dim or turn off the light irradiated to partial range SG.

At this time, the luminous intensity of high beam HB decreases at boundary portion EG adjacent to dimming range NB. This is because, in practice, it is difficult to sharply reduce the luminous intensity of the end portion of high beam HB at the boundary with dimming range NB, and the light generated by high beam HB is also irradiated at dimming range NB. That is, in order to obtain dimming range HB with a clear boundary where the influence of such light is suppressed, it is necessary to set the setting value of luminous intensity of boundary portion EG to be low. Further, another reason is that, especially on the oncoming lane side, since the upper end position of low beam LB is also relatively low, the reinforcing light generated by the low beam cannot be sufficiently obtained.

For this reason, as shown in FIG. 4(B) for example, the luminance of high beam HB may decrease in the vicinity of the upper part of line H and at a position overlapping with boundary portion EG (for example, the position indicated by symbol P in the figure), which may lead to a decrease in forward visibility. On the other hand, for example, if an attempt is made to solve this issue by increasing the luminance of boundary portion EG in high beam HB, the luminance of dimming range NB will also increase, making it difficult to obtain a clear dimming range NB. In other words, there is a trade-off relationship between obtaining a clear dimming range NB and improving visibility at boundary portion EG.

In contrast, in the present embodiment, by causing second unit 32 to irradiate partial range SG that is set to overlap the gap between the upper end of low beam LB and line H at least in the left side region of line V (the opposite lane side region) and also overlap with low beam LB below it, it becomes possible to provide reinforcing light to a position such as position P shown in FIG. 4 (B), as an example. Thereby, this makes it possible to suppress the decrease in forward visibility that can occur above line H on the opposite lane side due to the provision of dimming range NB. In other words, it is possible to improve forward visibility.

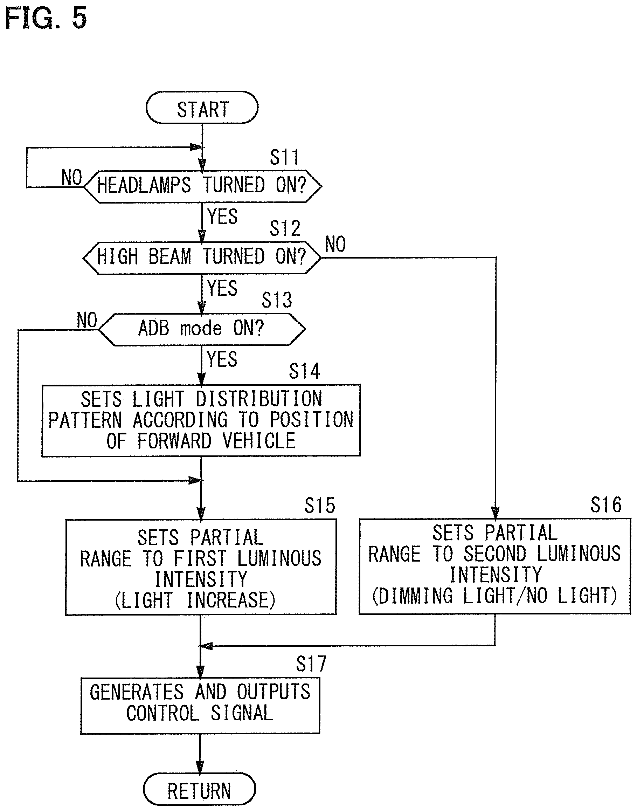

FIG. 5 is a flowchart showing an operation procedure of a controller in a vehicle headlight system. Here, note that as long as there are no contradictions or inconsistencies in the results of information processing, it is possible to rearrange the processing order or add other processing, and such embodiments are not excluded.

When a lamp switch (not shown) provided in the vehicle is operated to instruct the headlamps to be turned on (step S11; YES), and when high beam is instructed to be turned on (step S12; YES), and further, when an operation to turn on the mode to implement ADB control is performed (step S13; YES), light distribution pattern setting unit 11 of controller 1 sets a light distribution pattern according to the position of the vehicle ahead (preceding vehicle, oncoming vehicle) detected by target object detection sensor 2 (step S14).

When the mode to implement ADB control is turned off (step S13; NO), light distribution pattern setting unit 11 does not perform setting. In this case, light is irradiated over the entire irradiable range of high beam HB. Here, when control is being performed to automatically switch high beam on and off, at the time high beam is automatically turned on, the above-described step S13 is determined as affirmative.

When high beam irradiation is instructed to be turned on and/or when ADB control is being implemented, light increase setting unit 12 sets partial range SG to a first luminous intensity which corresponds to light increase (step S15). On the other hand, when high beam irradiation is not instructed to be turned on (step S12; NO), light increase setting unit 12 sets partial range SG to a second luminous intensity which corresponds to dimming light or turning off the light (step S16).

Control signal generating unit 13 generates a control signal according to the results of the settings of light distribution pattern setting unit 11 and light increase setting unit 12, and outputs the control signal to each headlight 3L, 3R (step S17). Headlights 3L, 3R, which are activated in response to the control signal, form low beam LB and high beam HB and irradiate them in front of the vehicle. Further, the brightness of partial range SG increases or decreases. Then, the process returns to step S11.

Here, when the lamp switch is not operated and the headlamps are not instructed to be turned on (step S11; NO), the determination in step S11 is repeated. The same applies when the lamp switch is operated to instruct the headlamps to be turned on and then instructed to be turned off.

According to the above embodiment, it is possible to improve the forward visibility (especially visibility on the oncoming lane side) during ADB control.

Here, note that the present disclosure is not limited to the content of the above described embodiments, and various modifications can be made within the scope of the gist of the present disclosure. For example, in the above-described embodiment, the position and width (length in H-line direction) of partial range SG are fixed, but they may be set variably according to the position and width of dimming range **NB.** Further, in the above embodiment, partial range SG is provided only on one side region (the region which corresponds to the oncoming lane side) across line V with respect to the own vehicle, but a partial range may be similarly provided on the other region (region corresponding to the own lane side) across line V.

The present disclosure has features as appended below.

### (Appendix 1)

A control apparatus for controlling the operation of a vehicle headlight mounted on a vehicle and capable of irradiating a low beam and a high beam with a variable light distribution pattern,
where, when a target object is present in front of the vehicle, based on a detection result of the target object, the control apparatus sets a dimming range within irradiation range of the high beam according to the position of the target object,
where, when the high beam and the low beam are instructed to be turned on, the control apparatus sets luminous intensity of a partial range to a first luminous intensity, the partial range being in front of the vehicle and at least in an oncoming lane side region with respect to the vehicle and set between a virtual reference line parallel to the vehicle width direction of the vehicle assumed in front of the vehicle and a predetermined position below the virtual reference line,
where, when the high beam is not instructed to be turned on and the low beam is instructed to be turned on, the control apparatus sets luminous intensity of the partial range to a second luminous intensity which is lower than the first luminous intensity, and
where the control apparatus generates a control signal for operating the vehicle lamp based on the dimming range setting result and the luminous intensity setting result for the partial range, and outputs the control signal to the vehicle headlight.

### (Appendix 2)

The control apparatus for the vehicle headlight according to appendix 1,
where the upper end position of the low beam of the oncoming lane side region is set lower than the upper end position of the low beam of an own lane side region.

### (Appendix 3)

The control apparatus for the vehicle headlight according to appendix 1 or 2,
where the partial range is set within 3° below the virtual reference line at an angle based on the position of the vehicle.

### (Appendix 4)

The control apparatus for the vehicle headlight according to appendix 3,
where the partial range is set within 2° below the virtual reference line at an angle based on the position of the vehicle.

### (Appendix 5)

The control apparatus for the vehicle headlight according to any one of appendices 1 to 4,
where the position and width of the partial range are fixed or set variably according to the position and width of the dimming range.

### (Appendix 6)

The control apparatus for the vehicle headlight according to any one of appendices 1 to 5,
where the partial range overlaps with at least a portion of the low beam irradiation range.

### (Appendix 7)

A control method for controlling the operation of a vehicle headlight mounted on a vehicle and capable of irradiating a low beam and a high beam with a variable light distribution pattern,
where, when a target object is present in front of the vehicle, based on a detection result of the target object, a controller sets a dimming range within irradiation range of the high beam according to the position of the target object,
where, when the high beam and the low beam are instructed to be turned on, the controller sets luminous intensity of a partial range to a first luminous intensity, the partial range being in front of the vehicle and at least in an oncoming lane side region with respect to the vehicle and set between a virtual reference line parallel to the vehicle width direction of the vehicle assumed in front of the vehicle and a predetermined position below the virtual reference line,
where, when the high beam is not instructed to be turned on and the low beam is instructed to be turned on, the controller sets luminous intensity of the partial range to a second luminous intensity which is lower than the first luminous intensity, and
where the controller generates a control signal for operating the vehicle lamp based on the dimming range setting result and the luminous intensity setting result for the partial range, and outputs the control signal to the vehicle headlight.

### (Appendix 8)

A vehicle headlight system including:
the control apparatus according to any one of appendices 1 to 6;
a headlight controlled by the control apparatus; and
a sensor for detecting the target object.

### Reference Signs List

1: Controller
2: Target object detection sensor
3L, 3R: Headlight
11: Light distribution pattern setting unit
12: Light increase setting unit
13: Control signal generating unit
31: First unit
32: Second unit

## Claims

1. A control apparatus for controlling the operation of a vehicle headlight mounted on a vehicle and capable of irradiating a low beam and a high beam with a variable light distribution pattern,
wherein, when a target object is present in front of the vehicle, based on a detection result of the target object, the control apparatus sets a dimming range within irradiation range of the high beam according to the position of the target object,
wherein, when the high beam and the low beam are instructed to be turned on, the control apparatus sets luminous intensity of a partial range to a first luminous intensity, the partial range being in front of the vehicle and at least in an oncoming lane side region with respect to the vehicle and set between a virtual reference line parallel to the vehicle width direction of the vehicle assumed in front of the vehicle and a predetermined position below the virtual reference line,
wherein, when the high beam is not instructed to be turned on and the low beam is instructed to be turned on, the control apparatus sets luminous intensity of the partial range to a second luminous intensity which is lower than the first luminous intensity, and
wherein the control apparatus generates a control signal for operating the vehicle lamp based on the dimming range setting result and the luminous intensity setting result for the partial range, and outputs the control signal to the vehicle headlight.

2. The control apparatus for the vehicle headlight according to claim 1,
wherein the upper end position of the low beam of the oncoming lane side region is set lower than the upper end position of the low beam of an own lane side region.

3. The control apparatus for the vehicle headlight according to claim 1,
wherein the partial range is set within 3° below the virtual reference line at an angle based on the position of the vehicle.

4. The control apparatus for the vehicle headlight according to claim 3,
wherein the partial range is set within 2° below the virtual reference line at an angle based on the position of the vehicle.

5. The control apparatus for the vehicle headlight according to claim 1,
wherein the position and width of the partial range are fixed or set variably according to the position and width of the dimming range.

6. The control apparatus for the vehicle headlight according to claim 1,
wherein the partial range overlaps with at least a portion of the low beam irradiation range.

7. A control method for controlling the operation of a vehicle headlight mounted on a vehicle and capable of irradiating a low beam and a high beam with a variable light distribution pattern,
wherein, when a target object is present in front of the vehicle, based on a detection result of the target object, a controller sets a dimming range within irradiation range of the high beam according to the position of the target object,
wherein, when the high beam and the low beam are instructed to be turned on, the controller sets luminous intensity of a partial range to a first luminous intensity, the partial range being in front of the vehicle and at least in an oncoming lane side region with respect to the vehicle and set between a virtual reference line parallel to the vehicle width direction of the vehicle assumed in front of the vehicle and a predetermined position below the virtual reference line,
wherein, when the high beam is not instructed to be turned on and the low beam is instructed to be turned on, the controller sets luminous intensity of the partial range to a second luminous intensity which is lower than the first luminous intensity, and
wherein the controller generates a control signal for operating the vehicle lamp based on the dimming range setting result and the luminous intensity setting result for the partial range, and outputs the control signal to the vehicle headlight.

8. A vehicle headlight system comprising:
the control apparatus according to claim 1;
a headlight controlled by the control apparatus; and
a sensor for detecting the target object.
